(19) Europäisches Patentamt
European Patent Office
Office européen des brevets

(11) Publication number: **0 377 447 A2**

(12) **EUROPEAN PATENT APPLICATION**

(21) Application number: 90100052.1

(51) Int. Cl.5: C08G 77/455, C08G 69/42

(22) Date of filing: 02.01.90

(30) Priority: 03.01.89 US 292975

(43) Date of publication of application:
11.07.90 Bulletin 90/28

(84) Designated Contracting States:
BE DE FR GB

(71) Applicant: DOW CORNING CORPORATION
P.O. Box 1767
Midland Michigan 48686-0994(US)

(72) Inventor: Decker, Gary Thomas
3308 Sharon
Midland Michigan(US)
Inventor: Lee, Chi-Long
1813 Brookfield
Midland Michigan(US)
Inventor: Gornowicz, Gerald Alphonse
4613 Bristol Court
Midland Michigan(US)

(74) Representative: Spott, Gottfried, Dr. et al
Patentanwälte Spott und Puschmann
Sendlinger-Tor-Platz 11
D-8000 München 2(DE)

(54) **Polysiloxane-polyamide block copolymers.**

(57) Polysiloxane-polyamide block copolymers are prepared from acid halide and aminophenoxy functional polyorganosiloxane. These block copolymers are hydrolytically stable and exhibit excellent thermal stability.

EP 0 377 447 A2

# POLYSILOXANE-POLYAMIDE BLOCK COPOLYMERS

Aminoalkyl end blocked polysiloxanes show promise as the precursors to prepare many types of siloxane-organic block copolymers. However, the aminoalkyldimethylsiloxy endblocking units which are needed to make these precursors are either not readily available or are too expensive because they require a capital investment which inhibits commercialization of the products using them. The expense is reduced if the precursors are of a higher molecular weight such as those which have greater than 100 units per molecule, because the amount of endblocking unit required for such polymers is lower as the molecular weight of the polysiloxane increases. But to make high modulus, high strength materials, lower molecular weight precursors are required, such as those having less than 50 siloxane units per molecule. Therefore, other ways of connecting the siloxane block to the organic block were investigated.

Silicone aryloxy materials have been reported to have reasonable hydrolytic stability and siloxane polysulfone block copolymers in which the siloxane was bonded to the polysulfone by an aryloxy linkage was reported by R. D. Lundberg, in "Handbook of Thermoplastic Elastomers", Walker, B. Med. Van Nostrand Reinhold Company, N.Y., p. 270 (1979), to have better hydrolytic stability than polyurethanes.

The search for aryloxy silicone precursors for making polysiloxane-polyamide block copolymers lead the present inventors to select aminoaryloxy functional siloxanes. However, these materials are unavailable and the particular precursors need to be prepared. One method of preparing aminoaryloxy silanes or siloxanes is reported by Patterson et al., in <u>J. of Polymer Science</u>, Part A-1, 1089-1110(1969). Patterson et al. teach preparing the aminoaryloxy silanes or siloxanes by the following reaction

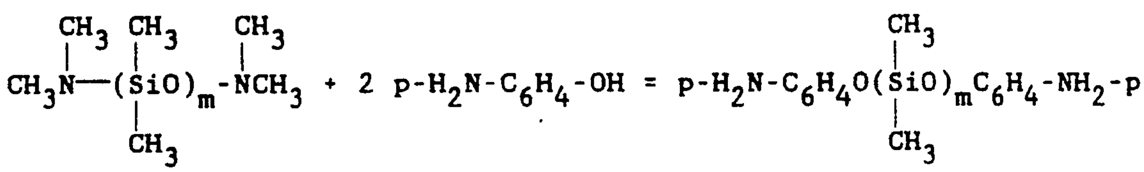

in which *m* has a value of 1, 2 or 3. Patterson et al. teach reacting these aminoaryloxy silanes and siloxanes with epoxy functional siloxanes to make thermoset epoxy resins with high dielectric constants and good toughness at low temperatures.

Butler et al. in the First Annual Summary Report, <u>Thermally Resistant Polymers For Fuel Tank Sealants</u>, Contract No NAS8-21401 DCN-1-8-54-10236(1F) and S1(1F), (1969), at pages 9 and 35, teach aminophenoxy siloxanes by the following reaction

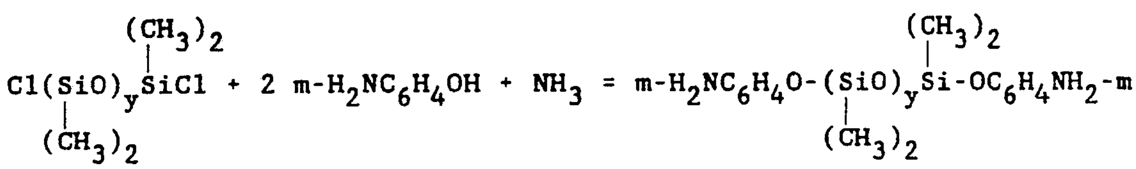

in which *y* is 1 or 2. Butler et al. react the aminophenoxy siloxanes with phosgene to make the isocyanate derivative.

It is an objective of the present invention to prepare block copolymers of polysiloxane and polyamide from aminophenoxy functional polysiloxane precursors which have excellent properties.

The present invention relates to a polysiloxane-polyamide block copolymer comprising a siloxane block of 5 to 50 diorganosiloxane units having at least two aryl groups bonded to silicon atoms by Si-O-C linkages and a polyamide block bonded to the siloxane block through the Si-O-C linkage.

The present invention also related to a method of making polysiloxane-polyamide block copolymers comprising reacting in the presence of an organic solvent, an organosiloxane having at least two silicon bonded hydrolyzable groups which are reactable with phenol hydroxyl groups to provide a compound HX with a boiling point less than aminophenol and an aminophenol, when the hydrolyzable group is chlorine or acetoxy there is also present a tertiary amine, to produce an aminoaryloxy functional organosiloxane solution, removing by-produced HX from the organosiloxane solution, removing the organic solvent from the organosiloxane solution to produce aminoaryloxy functional organosiloxane, mixing the aminoaryloxy functional organosiloxane with organic solvent, a tertiary amine, an acid halide having at least two carbonyl chloride groups per molecule, removing by-produced hydrochloride salt of tertiary amine to produce a

solution of the polysiloxane-polyamide block copolymer in an organic solvent.

The block copolymers of the present invention are prepared by reacting an acid halide with aminophenoxy functional polyorganosiloxane. The reaction is carried out at room temperature in an organic solvent for the reactants, such as toluene and tetrahydrofuran. The polyorganosiloxane has at least two aminophenoxy functional groups per molecule and there is from 5 to 50 siloxane units per molecule, preferably from 10 to 25 units per molecule. The acid halide is preferably an acid chloride which has at least two carbonyl chloride groups per molecule. The acid chlorides can be illustrated by the formula ClC-(O)-R-C(O)Cl for difunctional compounds where R is an alkylene group or an arylene group. The alkylene groups for R can be illustrated by ethylene, propylene and hexylene and the arylene groups can be illustrated by phenylene, tolylene and xylylene. For the preparation of thermoplastic block copolymers the aminophenoxy functional polyorganosiloxane is preferably an aminophenoxy endblocked polydiorganosiloxane, such as aminophenoxy endblocked polydimethylsiloxane having from 5 to 50 dimethylsiloxane units per molecule. The thermoplastic block copolymers have segments of the following general formula

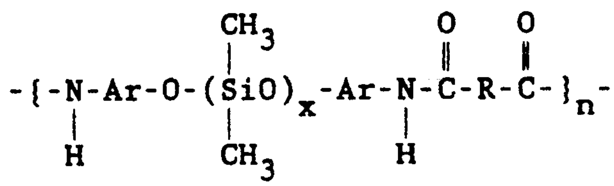

in which Ar is 1,3-phenyl or 1,4-phenyl, R is a divalent hydrocarbon group such as alkylene or arylene, $\underline{x}$ has a value of from 5 to 50 and $\underline{n}$ has a value greater than 1.

If thermoset block copolymers are desired, one can either use an acid halide with more than two carbonyl chloride groups per molecule or an aminophenoxy functional polyorganosiloxane with more than two aminophenoxy groups per molecule or a combination of both an acid halide with greater than two carbonyl chloride groups per molecule and an aminophenoxy functional polyorganosiloxane with greater than two aminophenoxy groups per molecule.

The aminophenoxy functional polyorganosiloxane can be prepared by reacting an aminophenol with a polyorganosiloxane having at least two silicon bonded hydrolyzable groups which are reactable with phenol hydroxyl groups to provide a compound HX with a boiling point at atmospheric pressure of less than aminophenol. The hydrolyzable groups can be chlorine, dimethylamino, diethylamino, methylethylketoximo, N-methylacetamido, acetoxy, methoxy and ethoxy. Although methoxy and ethoxy may be used they are not preferred because these groups react too slowly in this reaction, especially for making the endblocked polydiorganosiloxane. Chlorine is the preferred group.

The aminophenol and the polyorganosiloxane with the hydrolyzable groups are reacted in an organic solvent and in the presence of tertiary amine, such as triethylamine, if needed. The tertiary amine is needed when the hydrolyzable group is chlorine or other acidic groups which are to be removed from the reaction mixture by filtration of a salt of the tertiary amine and the HX formed from the reaction as a by-product. Preferably, the amounts of the aminophenol and the polyorganosiloxane are such that the phenol hydroxyl group and the hydrolyzable group are present in equivalent amounts. The organic solvent can be for example tetrahydrofuran. Preferably, when the polyorganosiloxane is chlorine functional, the aminophenol, the organic solvent and the tertiary amine are combined and heated to reflux at which time the chlorine functional polyorganosiloxane is slowly added. The preferred chlorine functional polyorganosiloxane has a formula

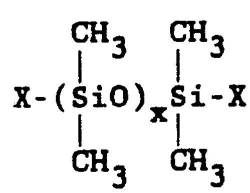

in which X is chlorine atom and $\underline{x}$ has a value of 5 to 50. An exothermic reaction takes place at this point and the heat is turned off until all the chlorine polyorganosiloxane is added. The resulting reaction mixture is then heated to reflux to complete the reaction which may take about an hour, then the mixture is cooled to about 35 to 40 °C. and filtered to remove the hydrochloride salt of the tertiary amine. When other functional polyorganosiloxanes are used, a salt may not be formed because the tertiary amine may not be required,

such as when the hydrolyzable group is dimethylamino or diethylamino. HX compounds, such as dimethylamine or diethylamine will volatilize from the reaction mixture and a tertiary amine is not necessary. The aminophenol is a primary or secondary amine where the amine is bonded directly to the phenol ring through a nitrogen-carbon bond, for example, m-aminophenol or p-aminophenol. An example of a secondary aminophenol is p-(N-methylamino)phenol. The various polyorganosiloxanes having hydrolyzable groups are known in the art and can be prepared by known methods.

Polysiloxane-polyamide-polyester block copolymers can also be prepared by combining the acid chloride with the aminophenoxy polyorganosiloxane in amounts such that the acid chloride is present in excess and unreacted carbonyl chloride groups remain. After this reaction, a alkanediol is added to complete the reaction, such as 1,4-butanediol or 1,6-hexanediol. It is preferred that substantially all the carbonyl chloride groups are depleted. The block copolymers presently obtained did not result in thermoplastic materials with properties better than the polysiloxane-polyamide block copolymers, however, there was no attempt to optimize these block copolymers.

The polysiloxane-polyamide block copolymers of the present invention have excellent properties. Even though the amide groups of the block copolymer of the present invention are attached to the siloxane block through an Si-O-C bond, these block copolymers exhibit good resistance to hydrolysis, showing no decrease in the molecular weight or loss of mechanical properties after soaking in water for up to 98 days. It is also surprising that the polysiloxane-polyamide block copolymers of the present invention exhibit excellent thermal stability in air. For example, the copolymers of the present invention prepared from aminophenoxy endblocked polydimethylsiloxane and $ClC(O)C_6H_4C(O)Cl$ retained their elastomeric properties after 45 days at 150° C. in an air oven with a weight loss of only 2 weight percent.

The method of preparing the polysiloxane-polyamide block copolymers of the present invention is less expensive than the preparation of copolymers prepared from aminoalkyl endblocked polydimethylsiloxane because the raw materials are readily available and do not require the investment of substantial capital for their preparation.

The following example is presented for illustrative purposes and should not be construed as limiting the present invention which is properly delineated in the claims.

## EXAMPLE

A chlorine endblocked polydimethylsiloxane precursor was prepared as follows. A mixture of 1,000 g (13.5 moles) of polydimethylcyclosiloxane having from 3 to 5 dimethylsiloxane units per molecule, 387 g (3 moles) of dimethyldichlorosilane and 1.4 g (0.1 weight percent based on the weight of the mixture) of perfluoromethane sulfonic acid was heated at 90° C. for 24 hours. A gas chromatograph of the resulting mixture showed no reaction had occurred. Two grams of an acid clay was added to the mixture which was then heated overnight at 90° C. A gas chromatograph of this resulting mixture showed that most of the dimethyldichlorosilane had reacted and numerous higher boiling compounds had formed. The reaction was further heated for two hours at 120° C. and a gas chromatograph showed no drastic changes in the composition compared to the previous reaction mixture. The reacted mixture was cooled and the catalyst was removed by filtration. The resulting chlorine endblocked polydimethylsiloxane had a chlorine neutral equivalent of 392 with an average of 9.6 dimethylsiloxane units per molecule (chlorine endblocked polydimethylsiloxane A). Using a similar method a chlorine endblocked polydimethylsiloxane was obtained with a chlorine equivalent of 765 with an average of 19.7 dimethylsiloxane units per molecule (chlorine endblocked polydimethylsiloxane B).

An aminophenoxy endblocked polydimethylsiloxane was prepared as follows. A 1-liter, three-necked flask equipped with an air stirrer, reflux condenser and addition funnel was charged with 27.8 g (0.255 mole) of either p-aminophenol or m-aminophenol, 130 g (1.3 mole) of triethylamine and 350 ml of tetrahydrofuran. This mixture was heated to reflux and then 100 g (0.255 equivalent, 392 chlorine equivalent weight) of chlorine endblocked polydimethylsiloxane A was added dropwise to the flask mixture. An exothermic reaction occurred and a white solid formed. The heat was turned off until all the chlorine endblocked polydimethylsiloxane A was added. The reaction was then heated at reflux for one hour, then cooled to about 35 to 40° C. and filtered. The tetrahydrofuran was stripped from the filtrate to give a black liquid containing a small amount of white solid, presumed to be the hydrochloride salt of triethylamine. The infrared analysis of the black liquid showed the following adsorptions:

| | |
|---|---|
| 3400 and 3300 $cm^{-1}$ | $NH_2$ asymmetric and symmetric stretching |
| 3000 and 2960 $cm^{-1}$ | Aromatic C-H stretch |
| 1620 and 1500 $cm^{-1}$ | Aromatic C = C stretch |
| 1250 $cm^{-1}$ | Si-$CH_3$ |
| 1100-1000 $cm^{-1}$ | SiOSi |
| 930 and 800 $cm^{-1}$ | Unassigned |

The resulting p-aminophenoxy endblocked polydimethylsiloxane (p-aminophenoxy polymer A) had an amine equivalent of 482 and an average of 10.1 dimethylsiloxane units per molecule. The resulting m-aminophenoxy endblocked polydimethylsiloxane (m-aminophenoxy polymer B) had an amine equivalent of 476 and an average of 9.9 dimethylsiloxane units per molecule.

An aminophenoxy endblocked polydimethylsiloxane was prepared as described above except 14.3 g (0.131 mole) of p-aminophenol and 100 g of chlorine endblocked polydimethylsiloxane C (0.131 equivalent, 765 chlorine equivalent) was used. The resulting p-aminophenoxy polydimethylsiloxane (p-aminophenoxy polymer B) had an amine equivalent of 840 and an average of 19.8 dimethylsiloxane units per molecule.

A polysiloxane-polyamide block copolymer was prepared as follows. In a 1-liter, 3-necked flask as described above in B., 10.1 g (0.1 equivalent) of p-ClC(O)-$C_6H_4$C(O)Cl, 190 g of tetrahydrofuran and 11 g (0.11 equivalent) of triethylamine were combined and 83.7 g (0.1 equivalent) of p-aminophenoxy polymer B was added dropwise at room temperature. The by-produced hydrochloride salt of triethylamine was removed from the solution by filtration. The polysiloxane-polyamide block copolymer A was obtained as a red solid which had a segment of the formula

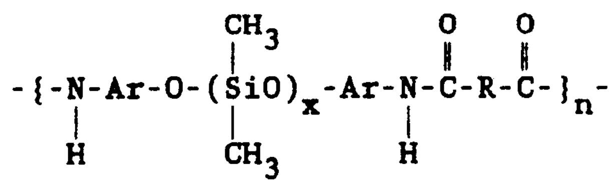

where Ar was para-phenylene, x had an average value of 19.8, R was para-phenylene and n had a value such that the Gpc $M_w$ was 50,100, the $M_n$ was 11,600 and the $M_w/M_n$ was 4,3.

Infrared analysis (IR) of the polysiloxane-polyamide block copolymer A showed the expected amide N-H stretch at 3250-3300 $cm^{-1}$, primary amide carbonyl absorption at 1640 $cm^{-1}$, secondary amide carbonyl absorption at 1600 $cm^{-1}$, Si-$CH_3$ at 1250 $cm^{-1}$, SiOSi at 1100-1000 $cm^{-1}$ and a band attributed to the siloxanes at 800 $cm^{-1}$.

This polysiloxane-polyamide block copolymer A had a tensile strength at break of 2.1 MPa, a tear strength of 9.6 kN/m and elongation of 70 percent, a durometer on the Shore A scale of 18.

The hydrolytic stability of the polysiloxane-polyamide block copolymer A was determined by soaking a sample in water at room temperature for various periods of time. The Gpc $M_w$ was determined after each period and the results observed were 52,700 initially, 57,400 after 12 days, 54,100 after 31 days and 50,200 after 98 days. This shows that there was no apparent change in the molecular weight of the block copolymer because the values were within experimental error for such measurements. The thermoplastic material appeared to be as strong after the water soaking as it was initially.

Polysiloxane-polyamide block copolymer A showed a decrease in the shear modulus starting at about 50 °C. reaching a minimum at 160 °C. It then increased until a maximum was observed at 260 °C. The only transition observed in the DSC was the siloxane $T_g$ at -117 °C. The thermo-gravimetric analysis scan from room temperature to 300 °C. in an air atmosphere showed no weight loss for this copolymer. The polysiloxane-polyamide block copolymer A showed a 2 percent weight loss after heating 45 days at 150 °C. and still retained considerable elasticity. A polysiloxane-polyamide block copolymer B was prepared as described above except that 10.1 g (0.1 equivalent) of ClC(O)$C_6H_4$C(O)Cl and 47.7 g (0.1 equivalent) of m-aminophenoxy polymer B was used. The resulting polysiloxane-polyamide block copolymer B had a segment formula as described above in which Ar was para-phenylene, x had an average value of 9.9, R was para-phenylene.

Polysiloxane-polyamide-polyester block copolymers were prepared as follows. In a 1-liter, 3-necked flask as described above in B., 24.2 g (0.239 equivalent) of terephthaloyl chloride, 190 g of tetrahydrofuran and 11 g (0.11 equivalent) of triethylamine were combined and 100 g (0.119 equivalent) of p-aminophenoxy

polymer B was added dropwise at room temperature. After the p-aminophenoxy polymer B was added, 5.3 g (0.119 equivalent) of 1,4-butanediol was added. The by-produced hydrochloride salt of triethylamine was removed from the solution by filtration. The polysiloxane-polyamide-polyester block copolymer A was obtained as a waxy reddish solid which had a segment of the formula

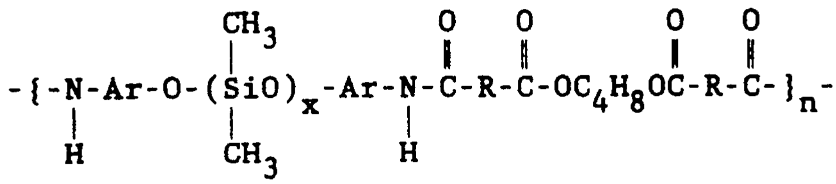

where Ar was para-phenylene, x had an average value of 19.8, R was para-phenylene and n had a value such that the Gpc $M_w$ was 10,500, the $M_n$ was 4,100 and the $M_w/M_n$ was 2.6. The IR showed the expected $C_6H_4C(O)O$ carbonyl ester absorption at 1700 $cm^{-1}$ in addition to the other absorptions as described above for polysiloxane-polyamide block copolymer A.

An attempt to make a comparison block copolymer as described above except that a polydimethylsiloxane endblocked with the following units

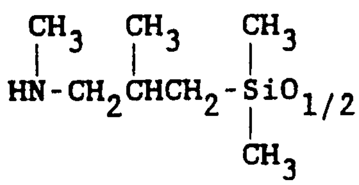

could not be made.

## Claims

1. A polysiloxane-polyamide block copolymer comprising a siloxane block of 5 to 50 diorganosiloxane units having at least two aryl groups bonded to silicon atoms by Si-O-C linkages and a polyamide block bonded to the siloxane block through the Si-O-C linkage.

2. The polysiloxane-polyamide block copolymer according to claim 1 which has segments of the following general formula

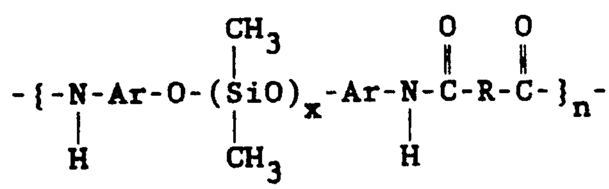

in which Ar is 1,3-phenyl or 1,4-phenyl, R is a divalent hydrocarbon group selected from the group consisting of alkylene and arylene, x has a value of from 5 to 50 and n has a value greater than 1.

3. The polysiloxane-polyamide block copolymer according to claim 1 further comprising a polyester block which is bonded to at least two polyamide blocks by ester linkages.

4. The polysiloxane-polyamide block copolymer according to claim 3 which has a segment formula

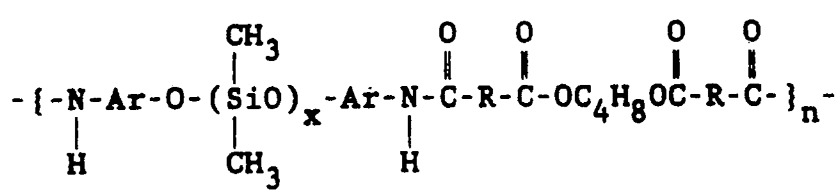

in which Ar is para-phenylene.

5. A method of making polysiloxane-polyamide block copolymers comprising
reacting in the presence of an organic solvent, an organosiloxane having at least two silicon-bonded hydrolyzable groups which are reactable with phenol hydroxyl groups to provide a compound HX with a boiling point less than aminophenol and an aminophenol, when the hydrolyzable group is chlorine or acetoxy there is also present a tertiary amine, to produce an aminoaryloxy functional organosiloxane solution,
removing by-produced HX from the organosiloxane solution,
removing the organic solvent from the organosiloxane solution to produce aminoaryloxy functional organosiloxane,
mixing the aminoaryloxy functional organosiloxane with organic solvent, a tertiary amine, an acid halide having at least two carbonyl chloride groups per molecule, and
removing by-produced hydrochloride salt of tertiary amine to produce a solution of the polysiloxane-polyamide block copolymer in an organic solvent.

6. The method in accordance with claim 5 in which the organosiloxane has the general formula

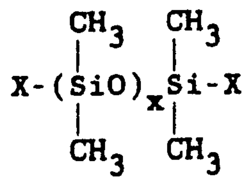

in which X is chlorine atom and x has a value of from 5 to 50, the tertiary amine has a formula $R'_3N$ where $R'$ is an alkyl radical and the acid halide is